# DEMANDE DE BREVET EUROPEEN

(11) **EP 0 978 957 A1**
(43) Date de publication de la demande: **09.02.2000**
(21) Numéro de dépôt: 99401941.2
(22) Date de dépôt: 29.07.1999
(51) Int. Cl.: H04B 7/212

(54) **Procédé d'allocation de liens entre un ensemble de zones et un ensemble de satellites**

(30) Priorité: 06.08.1998 FR 9810135
(71) Demandeur: ALCATEL, 75008 Paris (FR)
(72) Inventeur: Noreils, Fabrice, 91400 Orsay (FR); Gaudin, Etienne, 91400 Orsay (FR)
(74) Mandataire: Lamoureux, Bernard

(57) **Abrégé**

L'invention concerne un procédé pour allouer des liens entre un ensemble de zones Zi au sol et un ensemble de N satellites, les-dits liens étant déterminés par un canal. Selon l'invention, le procédé comprend les étapes suivantes, ces étapes étant itérées pour chaque canal k possible et pour chaque satellite q:
- construction d'un graphe d'interférence,
- utiliser ledit graphe par un algorithme de recherche associé à un algorithme de propagation de contraintes assurant la vérification des capacités.

Application aux communications par satellites.

## Description

L'invention s'applique aux communications par satellites et plus particulièrement à un système d'accès large bande utilisant une constellation de satellites en orbite basse dans le but de fournir des services large bande essentiellement dans le cadre des multimédias.

L'invention s'applique aux systèmes d'accès utilisant des satellites géostationnaires GEO mais aussi aux systèmes d'accès utilisant des satellites à basse altitude LEO (low Earth Orbit).

L'invention s'applique tout particulièrement à un nouveau système d'accès large bande qui est en cours de développement actuellement. Ce système est dénommé SkyBridge. Il permettra de mettre à la disposition des usagers du monde entier des services tels que l'accès rapide à l'Internet et la vidéoconférence. Il mettra en oeuvre une constellation de 80 satellites à basse altitude LEO qui relient, à des stations de connexion terrestres, les usagers professionnels et résidentiels équipés de terminaux peu onéreux.

On rappelle à ce propos que le système SkyBridge se compose de deux segments :
- un segment spatial : le segment spatial est constitué par 80 satellites LEO (plus les satellites de réserve), en orbite à une altitude de 1.457 km, et par le segment de contrôle au sol composé du centre de contrôle de satellite et des stations de poursuite, de télémétrie et de commande. Le segment spatial assure une couverture permanente dans la bande de latitudes de ±68°. Il relie chaque usager de SkyBridge avec la station de connexion la plus proche.
- un segment terrestre : le segment terrestre est constitué par les stations de connexion terrestres et par les terminaux d'usager. Les premières assurent l'interconnexion, via un commutateur ATM, avec des serveurs locaux et avec des réseaux terrestres à large bande et à bande étroite.

SkyBridge est un système d'accès fondé sur le mode de transfert asynchrone (ATM) qui sert à raccorder des usagers à un commutateur local. Le trafic émanant des terminaux est transmis de façon transparente par le satellite (c'est-à-dire sans d'autres traitements qu'une amplification et une transposition en fréquence) à la station de connexion et vice versa. Les stations de connexion ont des fonctions de commutation et servent d'interface aux réseaux terrestres.

La terre est découpée géographiquement en zones de rayon d'environ 350 km qui comprend jusqu'à 2.000.000 clients potentiels et une station de connexion (Gate Way) entre ces clients et les satellites de la constellation qui éclairent la zone. Cette station permet aux clients qui se trouvent dans cette zone de rentrer en communication avec la constellation.

De manière générale, les satellites d'une constellation en orbite basse défilent et peuvent éclairer une zone géographique z ainsi définie au minimum pendant quelques minutes et au maximum pendant une vingtaine de minutes.

Le système d'accès doit malgré tout assurer un certain débit entre la constellation et les points fixes que forment les stations de connexion dans cet environnement.

Pour cela, il est nécessaire d'optimiser les ressources dont on dispose à bords de chaque satellite. Il faut en effet trouver une affectation des ressources aux points au sol pour que les services proposés puissent être fournis et répondent bien aux demandes des clients.

Les ressources pour un satellite sont données par le nombre d'antennes ou de faisceaux ponctuels multiplié par le nombre de canaux (ressource fréquentielle) dont chaque satellite peut disposer dans la bande de fréquence réservée au système d'accès. On parlera d'une manière générale de liens.

Pour augmenter le nombre de bandes de fréquence utilisables dans la bande réservée au système, il est connu d' utiliser le fait que l'on peut émettre selon une polarisation ou selon une autre polarisation (ce qui double en pratique le nombre de bandes de fréquence de la bande réservée au système). Mais cela oblige quand même à ne pas utiliser le même canal pour des zones voisines.

On rencontre alors une première contrainte qui est due au problème d'interférences entre ondes lors de l'usage d'une même bande de fréquence (brouillage) pour des zones voisines. L'usage de la même bande de fréquence pour des zones voisines, (c'est-à-dire des zones adjacentes ou proches), provoque un brouillage qui diminue le rapport signal à bruit de l'onde reçue. Il est donc nécessaire dans ce cas de ne pas utiliser la même bande de fréquence pour lesdites zones.

Jusqu'à présent ce problème était résolu en utilisant des plans d'allocation de liens fixes sur une période donnée, établis pour plusieurs jours et mis en oeuvre par tous les satellites de la constellation. Ces plans leur sont communiqués périodiquement par une station de gestion de traitement au sol.

Une telle solution est tout à fait acceptable pour les systèmes d'accès existants c'est à dire des systèmes équipés d'antennes fixes.

Pour les systèmes futurs pour lesquels il est prévu d'avoir des antennes orientables (l'orientation est commandée électriquement ou mécaniquement), cette solution n'est pas satisfaisante car elle ne met pas à profit toutes les ressources offertes par l'aspect dynamiques de tels systèmes.

C'est en particulier le cas du nouveau système dénommé Skybridge où les antennes sont orientables à commande mécanique.

Les satellites de la constellation de ce système utiliseront des antennes orientables qui servent à produire des faisceaux ponctuels éclairant les zones du système et à les maintenir pointées vers les stations de connexion terrestre correspondantes. Chaque satellite éclaire une région de 3.000 km de rayon.

Il est donc nécessaire d'optimiser l'allocation des liens à chaque instant pour tenir compte des possibilités supplémentaires qu'offre la présence d'antennes orientables, la solution de l'état de la technique n'est donc plus acceptable.

La présente invention permet de résoudre ce problème.

Elle a pour objet un procédé pour allouer des liens entre un ensemble de zones au sol équipées chacune d'au moins une station de connexion, et un ensemble de satellites, ledits liens étant déterminés par un canal, comprenant les étapes suivantes, ces étapes étant itérées pour chaque canal k possible et pour chaque satellite q :
- construction d'un graphe d'interférence,
- utiliser ledit graphe par un algorithme de recherche associé à un algorithme de propagation de contraintes assurant la vérification des capacités.

Le procédé permet au moyen de la construction du graphe d'identifier toutes les zones vues par un satellite q, possédant déjà ou non un lien avec ce satellite, et pour lesquelles la demande d'allocation de canaux est supérieure au nombre de canaux alloués.

Le procédé permet en outre, au moyen d'un algorithme de recherche qui utilise ce graphe, de déterminer pour un canal donné k et un satellite donné q le plus grand nombre possible de zones vers lesquelles on pourra orienter des faisceaux dudit satellite pour le canal donné.

Le procédé permet également de prendre en compte des contraintes relatives à chaque valeur possible des variables, imposées au fur et à mesure de la construction du graphe ou liées aux conditions initiales.

D'autres caractéristiques et avantages du procédé conforme à l'invention apparaîtront à la lecture de la description qui est donnée ci-après et en regard des dessins sur lesquels :
- la figure 1, représente un schéma illustrant l'empreinte au sol d'un satellite et le graphe d'interférence correspondant,
- la figure 2, représente les étapes du procédé selon l'invention.

A chaque instant dt, chaque satellite q éclaire un ensemble de Nz zones Zi se trouvant dans la région R formant l'empreinte au sol de ce satellite.

Pour chacune de ces zones on doit déterminer :
- à quel satellite une zone doit être reliée,
- le canal qui pourra être utilisé pour un couple (satellite, zone) et cela en respectant une condition portant sur le rapport signal/bruit afin d'éviter toute interférence ou brouillage dans les communications.

A un instant donné dt, chaque zone Zi au sol est vue par Nq satellites de la constellation laquelle comporte N satellites.

En outre, un satellite q couvre à un instant donné Nz zones et dispose de A faisceaux et de NFp canaux possibles susceptibles de satisfaire la demande pour cette zone.

On connaît également pour une zone quelle est sont besoin en trafic, c'est-à-dire quel est le nombre de canaux demandés CD. En effet, ce nombre est déduit dès lors que l'on a fixé un seuil I maximun d'interférence acceptable ou seuil de brouillage.

On connaît aussi le nombre de canaux alloués CA.

A l'initialisation de l'algorithme de recherche ce nombre sera en général à zéro, à moins que l'algorithme démarre avec des données d'initialisation correspondant à un plan d'allocation pré-établi.

Au fur et à mesure du déroulement de l'algorithme de recherche le nombre de canaux alloués s'incrémente jusqu'à atteindre le nombre de canaux demandés CD. Lorsque la demande est satisfaite, la zone Zi considérée est retirée du graphe et par conséquent de l'algorithme de recherche comme on va l'expliciter dans la suite.

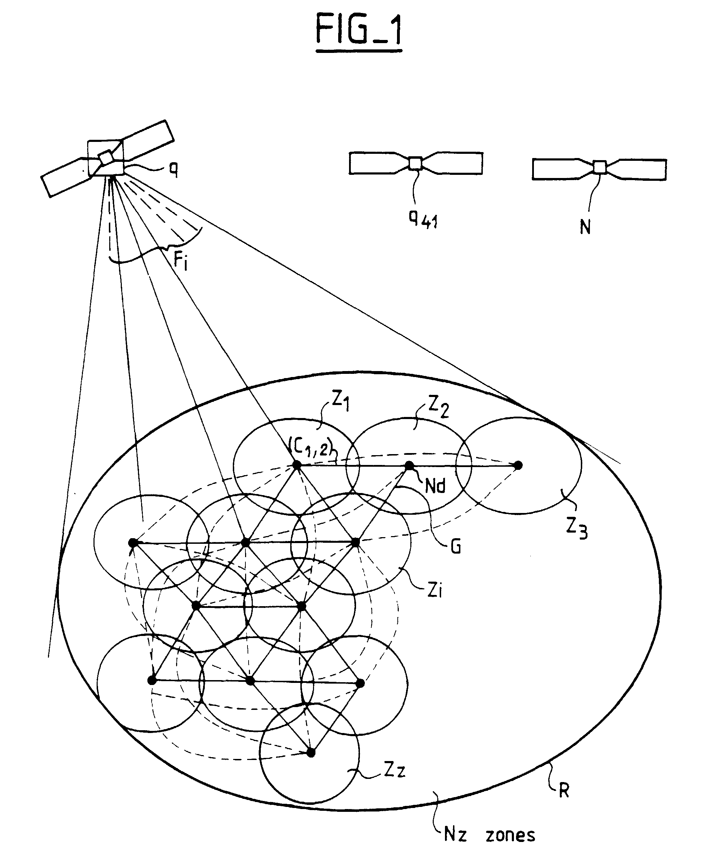

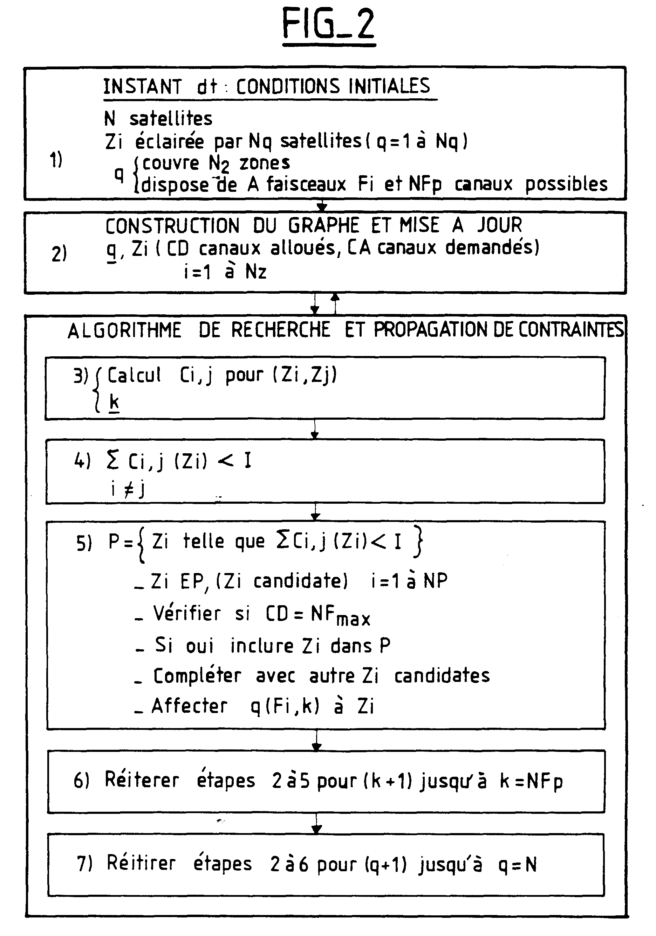

Selon une première étape I (figure 2) du procédé, on construit un graphe;
1- un satellite q couvre à un instant donné Nz zones et dispose de A faisceaux et de NFp canaux possibles,
2- le graphe G illustré par la figure 1, est tel que chaque noeud Nd correspond à une zone Zi (Z₁ à Z_{Nz}) telle que son nombre de canaux demandé CD est supérieur au nombre de canaux alloués CA (CD et CA étant des données d'entrée pour la construction du graphe) .

Le graphe est mis à jour par le retrait ou l'ajout d'une zone au fur et à mesure de l'allocation de liens.

On rappelle pour toute la suite qu'un canal est une ressource fréquentielle sur un satellite qui peut avoir plusieurs modalités comme le temps, la polarisation.

L'étape II consiste à utiliser le graphe par un algorithme de recherche associé à un algorithme de propagation de contraintes pour assurer la vérification des capacités.

L'algorithme de recherche consiste, pour un satellite q et pour un canal k donné, à déterminer le plus grand nombre possible de zones Zi vers lesquelles on peut orienter un faisceau Fi en allouant à ce faisceau le canal k.

A cette fin on opère les étapes suivantes :
3- on calcule un coefficient d'interférence Ci,j pour chaque couple de zones (Zi,Zj) du graphe pour un canal k, k = 1 à NFp (nombre de canaux possibles). Ce coefficient est calculé au moyen d'une méthode connue classique. Il s'agit d'un calcul du rapport signal à bruit dans les conditions les plus mauvaises de réception, c'est-à-dire lorsque l'on émet avec un même niveau de puissance et la même bande de fréquence vers toutes les zones. On peut dès lors se fixer un seuil maximum d'interférence acceptable I.
4- on compare la somme des coefficients Ci,j d'interférence pour chaque zone Zi au seuil fixé I.
   Ainsi pour une zone Zi on effectue le calcul : somme Ci,j que l'on compare à I (i différent de j).
5- on crée une partition P comportant au plus A éléments, (le nombre A correspondant au nombre de faisceaux) qui comportent Np zones Zi telle que pour chaque zone la somme des coefficients Ci,j ne dépasse pas le seuil I.

On introduit lors de la création de la partition des contraintes. On connaît :
- les zones Zi que peut éclairer une antenne avec ses faisceaux (toutes les zones visibles), i = 1 à Np,
- le nombre de faisceaux éclairant une zone Zi et par conséquent le nombre de canaux possibles. Le nombre minimum de canaux correspond au nombre de canaux réellement affecté vers la zone à un instant donné au cours de la mise en oeuvre de l'algorithme. Le nombre maximum de canaux est le nombre de faisceaux multiplié par le nombre de canaux par faisceaux potentiellement orientable vers cette zone pour l'ensemble des satellites.

Pour cela,
- on prend une zone Zi candidate (i = 1 à Np) de la partition P,
- on vérifie si le nombre de canaux demandés CD pour cette zone, est égal au nombre maximun de canaux pour cette zone, si c'est le cas, alors on inclus cette zone dans la partition,
- on complète la partition par les autres zones candidates c'est à dire les zones Zi pour lesquelles cette vérification est négative mais pour lesquelles la somme des coefficients Ci,j ne dépasse pas le seuil I.

6- on réitère les étapes de construction du graphe (étape 2) jusqu'à l'itération sur toutes les zones de la partition (étape 5) pour un autre canal k, (k = 1 à NFp)
7- on réitère toutes les étapes précédentes pour le N-1 autres satellites.

## Revendications

1. Procédé pour allouer des liens entre un ensemble de zones Zi au sol équipées chacune d'au moins une station au sol et un ensemble de N satellites, les-dits liens étant déterminés par un canal, comprenant les étapes suivantes, ces étapes étant itérées pour chaque canal k possible et pour chaque satellite q:
- construction d'un graphe d'interférence,
- utiliser ledit graphe par un algorithme de recherche associé à un algorithme de propagation de contraintes assurant la vérification des capacités.

2. Procédé pour allouer des liens selon la revendication 1, caractérisé en ce que la construction du graphe comporte les étapes suivantes :
à un instant dt, au cours duquel un satellite q couvre Nz zones et dispose de A faisceaux Fi (i = 1 à A) et NFp canaux possibles, k = 1 à NFp
- construire le graphe pour ce satellite q dans lequel chaque noeud du graphe correspond à une zone Zi (i = 1 à Nz) telle que le nombre de canaux demandés CD pour cette zone est supérieur au nombre de canaux alloués CA,
- mettre à jour le graphe par le retrait ou l'ajout d'une zone au fur et à mesure de l'allocation de liens.

3. Procédé pour allouer des liens selon la revendication 1, caractérisé en ce que l'algorithme de recherche met en oeuvre les étapes suivantes :
- calculer un coefficient d'interférence Ci,j pour chaque couple de zones Zi, Zj du graphe pour un canal k,
- comparer la somme des coefficients Ci,j d'interférence pour chaque zone Zi à un seuil prédéterminé I maximum d'interférence acceptable.
- créer une partition P d'au plus A éléments, A correspondant au nombre de faisceaux, qui comporte Np zones Zi (i = 1 à Np) telle que pour chaque zone la somme des coefficients Ci,j ne dépasse pas le seuil I prédéterminé.

4. Procédé pour allouer des liens selon la revendication 3, caractérisé en ce que la création de la partition comporte les étapes suivantes:
- on prend une zone Zi candidate (i = 1 à Np) de la partition P,
- on vérifie si le nombre de canaux demandés CD pour cette zone, est égal au nombre maximun de canaux pour cette zone, si c'est le cas, alors on inclus cette zone dans la partition,
- on complète la partition par les autres zones candidates pour lesquelles la somme des coefficients Ci,j ne dépasse pas le seuil I.

5. Procédé pour allouer des liens selon la revendication 1, selon lequel l'itération pour chaque canal k et pour chaque satellite q consiste à réitérer toutes les étapes du procédé pour un autre canal k jusqu'au dernier canal possible k = NFp, puis à réitérer l'ensemble des étapes précédentes pour un autre satellite q jusqu'au dernier satellite q = N.
